Europäisches Patentamt

European Patent Office

Office européen des brevets

(11) Publication number: **0 180 241**
A2

## (12) EUROPEAN PATENT APPLICATION

(21) Application number: **85113924.6**

(22) Date of filing: **04.11.85**

(51) Int. Cl.⁴: **B 65 D 85/78**

(30) Priority: **01.08.85 IT 2181785**

(43) Date of publication of application: **07.05.86**
**Bulletin 86/19**

(84) Designated Contracting States: **AT BE CH DE FR GB LI LU NL SE**

(71) Applicant: **I.CONT. S.p.A., Via G.B. Marino, 13/A, I-80125 Napoli (IT)**

(72) Inventor: **Boriello, Mario, Via A. Falcone 376, I-80127 Napoli (IT)**

(74) Representative: **Modiano, Guido et al, MODIANO, JOSIF, PISANTY & STAUB Modiano & Associati Via Meravigli, 16, I-20123 Milan (IT)**

(54) **Container particularly for dense and semi-dense food products, and the like.**

(57) The present invention relates to a container particularly for dense, semi-dense food and the like products, which is peculiar in having a containment body (2) formed from a deformable material and defining an outlet mouth (3). To the cited outlet mouth (3) there is attachable in sealed relationship a cover member (10) which defines a contoured extrusion hole (16) for the product to exit, on squeezing said containment body (2), in a shape controlled by said contoured hole (16). Also provided is a diaphragm seal (18) arranged to close said contoured hole (16) and being tearable away from it.

"CONTAINER PARTICULARLY FOR DENSE AND SEMI-DENSE
FOOD PRODUCTS, AND THE LIKE"

The present invention relates to a container particularly for dense and semi-dense food products and the like.

As is known, for such frozen products as sherbets and the like, it is current practice to use package containers of basically conical shape which afford the peculiar possibility of squeezing the product out of them by the application of a compression force to the container walls.

In such a prior form, the product is taken out of the container while retaining the same shape that it has assumed inside the container.

It is the aim of the present invention to provide a novel package container for use with dense, semi-dense food products, and the like, such as creams of some consistency, ice cream, and the like, which enables the product to be taken out of the container such that the product will assume a pre-settable shape.

Within the above aim, it is a particular object of the invention to provide a container which is designed to be readily accepted by standard existing filling plants of the automatic type.

Another object of the present invention is to provide a container which can afford full protection for the product against any tampering.

A not least object of the present invention is to provide a container particularly for dense, semi-dense food and the like products, which can be formed from commercially readily available elements and materials, and be competitive from a purely economical standpoint.

The above aim, and these and other objects to become apparent herein below, are achieved by a container particularly for dense, semi-dense food and the like products, according to the invention, characterised in that it comprises a containment body formed from a deformable material and defining an outlet mouth , to said outlet mouth  there being attachable in sealed relationship a cover member defining a contoured extrusion hole for the product to exit in a shape controlled by said contoured hole on squeezing said containment body, and a diaphragm seal arranged to cover said contoured hole and adapted for tear-away removal therefrom.

Further features and advantages will be apparent from the following detailed description of a preferred, but not exclusive, embodiment of a   container particularly for dense, semi-dense food and the like products, to be taken in conjunction with the accompanying illustrative and not limitative drawings, where:

Figure 1 is an exploded perspective view showing diagramatically one possible embodiment of this container;

Figure 2 is a  partial  sectional  view  of this container;

Figure 3 illustrates one possible application form of this container.

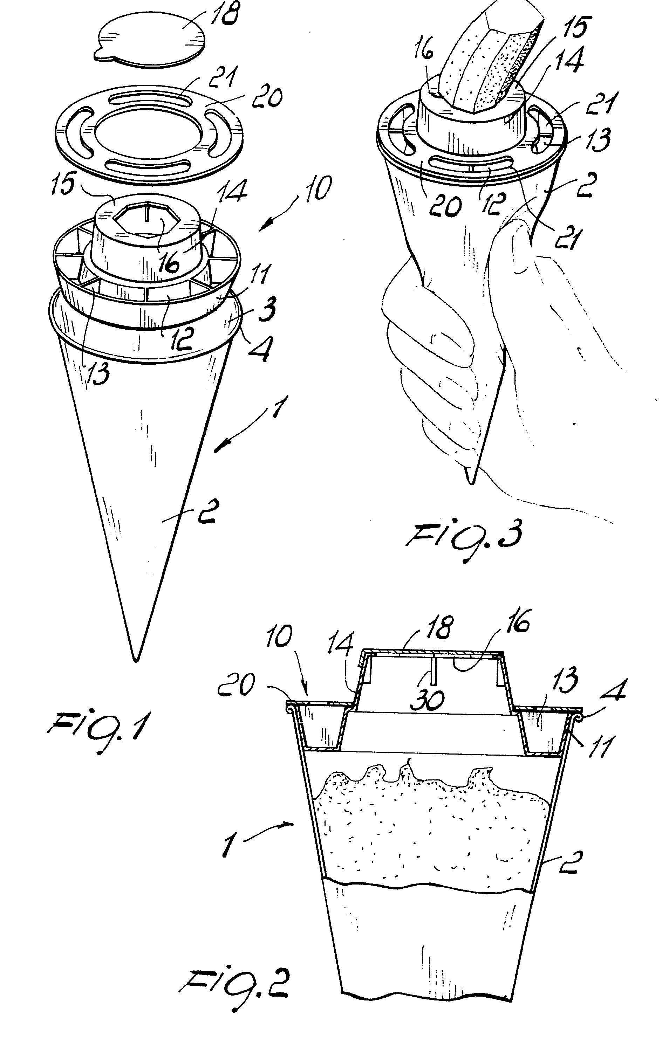

With reference to the cited drawing figures, a package container for dense, semi-dense food and the like products, according to the invention, which is generally designated with the reference numeral 1, comprises a containment body 2 to be formed with any desired shape and defining an outlet mouth, indicated at 3.

The body 2 is constructed of a wrapped deformable material which may be coated aluminum, polythene-coated cardboard, or any other material irrespective of how bonded, having readily deformable characteristics.

According to a preferred, but not binding, embodiment the mouth 3 is delimited by an outwardly rolled rim 4.

To said outlet mouth 3 there may be attached in sealed relationship a cover member, generally designated with the reference numeral 10, which has preferably a frusto-conically shaped annular rim 11 mating with a corresponding frusto-conical formation on the container 2 at the mouth 3, thereby providing a fitting section for accommodating the cover member inside the container 2.

The cover member 10 defines an annular collector zone 12 occupied by radial partitions 13; from the annular zone 12 there extends a central projecting portion 14 terminated with a flat upper portion 15 where a contoured hole 16 is provided which, in the accompanying drawing, is hexagonal in shape, but may obviously have any convenient shape.

The cover member 10 is preferably formed from a mouldable thermoplastic material by either injection or vacuum moulding.

Also provided is an annular plate 20 having slots 21 which is formed preferably from polythene-coated cardboard, or cardboard treated with other plastics, which may be placed to close the cited annular zone which is advantageously connected by heat-sealing to the cited partitions 13 which also form a support zone therefor.

At the flat portion 15 of the cover member, where the cited contoured hole 16 is defined, a seal diaphragm 18 may be affixed, again by heat sealing, which comprises advantageously a sheet of paper or aluminium foil, or a treated film, or any other materials which can be heat-sealed to the cover member.

The cited seal diaphragm covers the contoured hole and is readily torn away.

In practical use, the users are supplied with the containment body 2 and cover member fully pre-assembled, such that the user, after filling the containment body 2 with a pre-selected food product, can easily mount the cover member in a sealed fashion by heat sealing together the portion of the annular plate 20 which stands proud of the cover member and the rolled rim of the containment body 2.

In a different embodiment, the cover member 10 and containment body 2 could be connected to each other by a heat sealing operation on the top side end of the containment body and the flared rim of the cover member.

According to a further varied form, it would also be possible to connect the cover member to the container body by clinching together the rim of the container mouth and the frusto-conical rim of the cover member.

It should be added to the foregoing that inwards of the central projection on the cover member there are provided radial ribs 30 which prevent the various stacked covers prior to their use from becoming interlocked.

The container just described enables the product contained in it to be extruded out, thus imparting the product with the configuration dictated by the contour of the hole 16; to that end, it will be sufficient to squeeze the containment body with one hand, which on being deformed, develops a pressure extruding the product out.

The extruded product may be consumed directly as a stick product, and when so used, the annular zone encircling the cover member may function as a collector tray for drops and the like.

Alternatively, the container may be used to produce special patterns on cakes and the like.

It may appreciated from the foregoing that the invention achieves its objects, and in particular that a container of this invention suits perfectly the conventional packaging equipment for paste food products and affords a novel function unknown heretofore.

The invention herein is susceptible to many modifications and variations without departing from the scope of the inventive concept.

Furthermore, all of the details may be replaced with technically equivalent ones.

In practicing the invention, the materials used, so long as compatible with the specific applications, and the dimensions and contingent shapes may be any selected ones to meet individual requirements.

## CLAIMS

1. A container particularly for dense, semi-dense food and the like products, characterised in that it comprises a containment body (2) formed from a deformable material and defining an outlet mouth (3), to said outlet mouth there being attachable in sealed relationship a cover member (10) defining a contoured extrusion hole (16) for the product to exit in a shape controlled by said contoured hole (16) on squeezing said containment body (2), and a diaphragm seal (18) arranged to cover said contoured hole (16) and adapted for tear-away removal therefrom.

2. A container according to the preceding claim, characterised in that said cover member (10) has a frusto-conical outer rim (11) matable with a corresponding formation defined on said containment body (2) close to said mouth (3).

3. A container according to the preceding claims, characterised in that said cover member (10) comprises an annular zone (12) delimited by said frusto-conical outer rim (11) and being provided with radial partitions (13), in the central portion of said cover member (10) there being provided a projecting portion (14) terminating with a flat zone (15) where said contoured hole (16) is defined, over said flat zone (15) there being applied said diaphragm seal (18).

4. A container according to one or more of the preceding claims, characterised in that it comprises an annular plate (20) adapted for overlapping said annular zone (12) and having a portion projecting from said frusto-conical outer rim (11).

5. A container according to one or more of the preceding claims, characterised in that said annular plate (20) is heat sealed to said annular zone (12).

6. A container according to one or more of the preceding claims, characterised in that said cover member (10) is applied sealingly on said containment body (2) by means of heat sealed zones occupying the rim (4) delimiting said mouth (3) and the projecting portion of said annular plate (20).

7. A container according to one or more of the preceding claims, characterised in that said cover member (10) is connected to said container body (2) by heat sealed zones provided in between said frusto-conical outer rim (11) and the inner lateral surface of said container body (2).

8. A container according to one or more of the preceding claims, characterised in that said containment body (2) is deformable by squeezing.

0 180 241

*18*

*21*

*20*

*15*

*14*

*10*

*16*

*11*

*3*

*12*

*4*

*13*

*1*

*2*

**Fig.1**

*16*

*15*

*14*

*21*

*13*

*2*

*20*   *12*   *21*

**Fig.3**

*10*   *14*   *18*   *16*

*20*   *30*   *13*   *4*

*1*   *11*

*2*

**Fig.2**